# EUROPEAN PATENT SPECIFICATION

(11) **EP 1 033 387 B1**
(45) Date of publication and mention of the grant of the patent: **12.05.2004**
(21) Application number: 00301722.5
(22) Date of filing: 02.03.2000
(51) Int. Cl.: C08L 71/02, C08G 65/32, C08K 3/36, C08G 77/12, C08K 9/06

(54) **Curable fluoropolyether base rubber compositions**
Vernetzbare Fluoropolyetherzusammensetzungen
Compositions de fluoropolyéthers réticulables

(30) Priority: 02.03.1999 JP 5354399
(43) Date of publication of application: 06.09.2000
(73) Proprietor: SHIN-ETSU CHEMICAL CO., LTD., Chiyoda-ku Tokyo (JP)
(72) Inventor: Matsuda, Takashi, Matsuida-machi, Usui-gun, Gunma-ken (JP); Sato, Shinichi, Matsuida-machi, Usui-gun, Gunma-ken (JP)
(74) Representative: Stoner, Gerard Patrick

(56) References cited:
- EP-A- 0 765 916
- EP-A- 0 967 251
- EP-A- 1 114 846
- US-A- 5 358 996
- US-A- 5 591 797
- US-A- 5 837 774

## Description

This invention relates to curable fluoropolyether base rubber compositions capable of forming cured products having improved compression set as well as water repellency, oil repellency, solvent resistance, chemical resistance, weather resistance, and mold release and suitable for use as O-rings and the like; the cured articles are also aspects of the invention.

A variety of microparticulate silica products surface treated to be hydrophobic are currently available. Most of them have a nitrogen atom content of less than 100 ppm and are of such nature that when 4 g of silica is dispersed in a mixture of 50 ml of pure water and 50 ml of methanol, the dispersion exhibits pH 4 to 7.

There are known compositions comprising a linear fluoropolyether compound having at least two alkenyl groups in a molecule and a perfluoroalkyl ether structure in its backbone, an organosilicon compound having at least two hydrogen atoms each attached to a silicon atom in a molecule, and a hydrosilylation catalyst. It was recently found that when microparticulate silica surface treated to be hydrophobic and having a surface area of at least 50 m²/g is blended in the compositions, the cured parts thereof are substantially improved in mechanical strength. The blending of silica gives fluoropolyether base rubber compositions having a good balance of many properties including heat resistance, chemical resistance, solvent resistance, mold release, water repellency, oil repellency, and weather resistance.

Although these fluoropolyether base rubber compositions exert satisfactory performance in most applications, they are unsatisfactory in molding applications to form O-rings and gaskets where a lower compression set is required. It would be desirable to improve the compression set of these compositions.

An object of the invention is to provide a novel and useful curable fluoropolyether base rubber composition capable of forming a cured product preferably having good compression set, combined with. repellency, oil repellency, solvent resistance, chemical resistance, weather resistance, and mold release.

The invention is directed to a curable fluoropolyether base rubber composition comprising a linear fluoropolyether compound having at least two alkenyl groups in a molecule and a perfluoroalkyl ether structure in its backbone, an organosilicon compound having at least two hydrogen atoms each attached to a silicon atom in a molecule, and a hydrosilylation catalyst. The inventor has found that when a specific amount of surface-hydrophobicized microparticulate silica having a specific surface area of at least 50 m²/g and a nitrogen atom content of 500 to 5,000 ppm is blended in this composition, the resulting cured product exhibited not only the properties including heat resistance, chemical resistance, solvent resistance, mold release, water repellency, oil repellency, and weather resistance characterising the known fluoropolyether rubbers incorporating the standard surface; hydrophobicized microparticulate silica, but was significantly improved in compression set. Then the composition can be used in a wider variety of molding applications including O-rings and gaskets.

The invention provides in one aspect, as specified in claim 1, a curable fluoropolyether base rubber composition comprising (A) 100 parts by weight of a linear fluoropolyether compound having at least two alkenyl groups in a molecule and a perfluoroalkyl ether structure in its backbone, (B) 0.1 to 50 parts by weight of an organosilicon compound having at least two hydrogen atoms each attached to a silicon atom in a molecule, (C) a catalytic amount of a hydrosilylation catalyst, and (D) 5 to 60 parts by weight of microparticulate silica surface treated to be hydrophobic, using a cyclic silizane defined below, and having a specific surface area of at least 50 m²/g and a nitrogen atom content of 500 to 5,000 ppm.

Preferably the hydrophobicized microparticulate silica (D) is such that when 4 g of the silica is dispersed in a mixture of 50 ml of pure water and 50 ml of methanol, the dispersion exhibits pH 8.5 to 10.5.

In another aspect (claim 9) the invention relates to articles comprising the cured rubber composition.

### DESCRIPTION OF THE PREFERRED EMBODIMENTS

In the curable fluoropolyether base rubber composition of the invention, component (A) is a linear fluoropolyether compound having at least two alkenyl groups in a molecule and a perfluoroalkyl ether structure in its backbone.

The perfluoroalkyl ether structure is represented, for example, by the following general formula (3):

- (Rf-O)_{q}- (3)

wherein Rf is a straight or branched perfluoroalkylene group of 1 to 6 carbon atoms, preferably 1 to 3 carbon atoms, and letter q is an integer of 1 to 500, preferably 2 to 400, more preferably 10 to 200.

Examples of the recurring units (Rf-O) of formula (3) are shown below.

- CF₂O-, -CF₂CF₂O-, -CF₂CF₂CF₂O-,

-CF(CF₃)CF₂O-, -CF₂CF₂CF₂CF₂O-,

- CF₂CF₂CF₂CF₂CF₂CF₂O-,

and

-C(CF₃)₂O-.

Of these, -CF₂O-, -CF₂CF₂O-, -CF₂CF₂CF₂O-, and -CF(CF₃)CF₂O- are preferred. It is understood that the perfluoroalkyl ether structure may consist of recurring units of one type or recurring units of two or more types.

The alkenyl groups included in the linear fluoropolyether compound (A) are preferably those of 2 to 8 carbon atoms, especially 2 to 6 carbon atoms, and terminated with a CH₂=CH- structure. Examples are vinyl, allyl, propenyl, isopropenyl, butenyl, and hexenyl, with vinyl and allyl being most preferred. The alkenyl groups may be positioned intermediate the molecule, but preferably attached to both ends of the molecular chain. In the latter case, the alkenyl groups may be attached either directly to both ends of the backbone of the linear fluoropolyether compound or to the backbone through a divalent linking group such as

- CH₂-, -CH₂O- or -Y-NR-CO-.

Herein Y is -CH₂- or a group of the following structural formula (A): 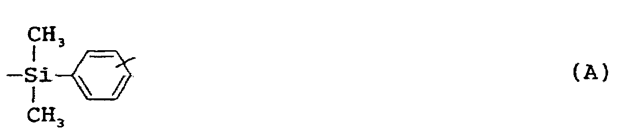 (the bond may be at o, m or p-position) and R is hydrogen, methyl, phenyl or allyl.

Of the linear fluoropolyether compounds (A) mentioned above, those of the following general formula (1) are preferred. 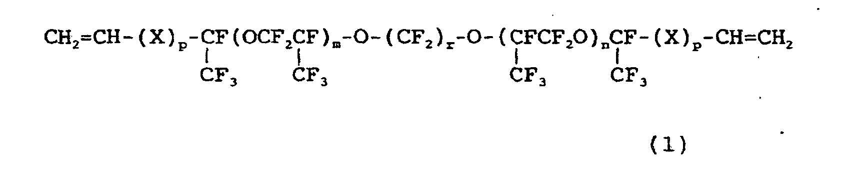 In formula (1), X is independently selected from among -CH₂-, -CH₂O- and -Y-NR-CO-, letter p is independently equal to 0 or 1, r is an integer of 2 to 6, and m and n are integers of 0 to 200, preferably 5 to 100. Y is -CH₂- or a group of the following structural formula (A): 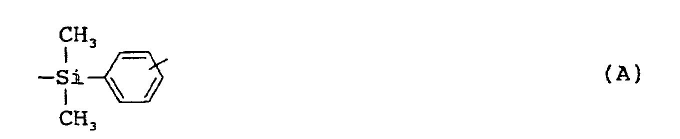 (the bond may be at o, m or p-position). R is hydrogen, methyl, phenyl or allyl.

The linear fluoropolyether compound of formula (1) desirably has a weight average molecular weight of about 400 to about 100,000, and especially about 1,000 to about 50,000.

Illustrative examples of the fluoropolyether compound of formula (1) are given below. In the following formulae, m and n are as defined above.

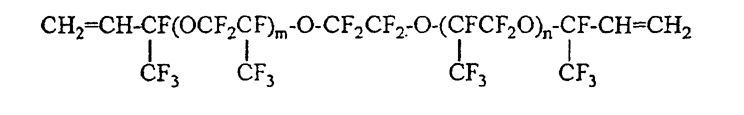

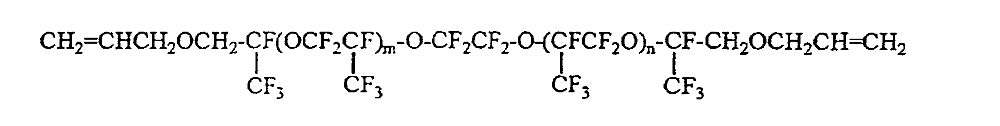

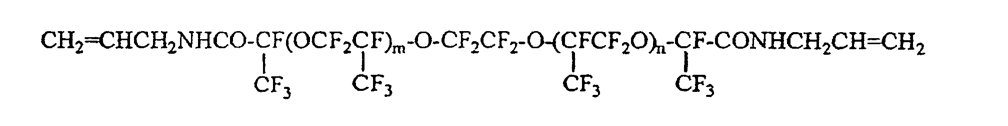

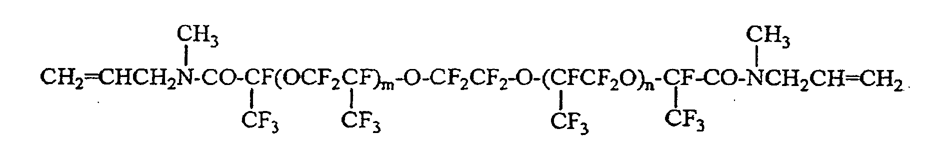

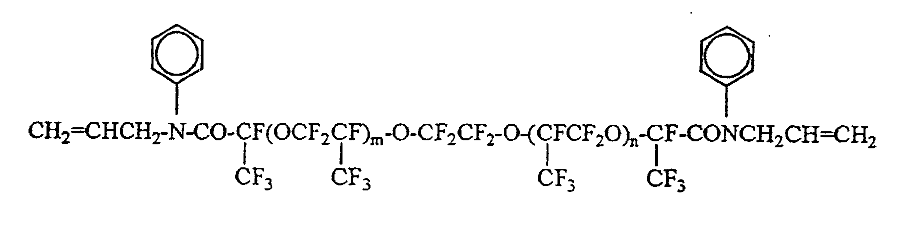

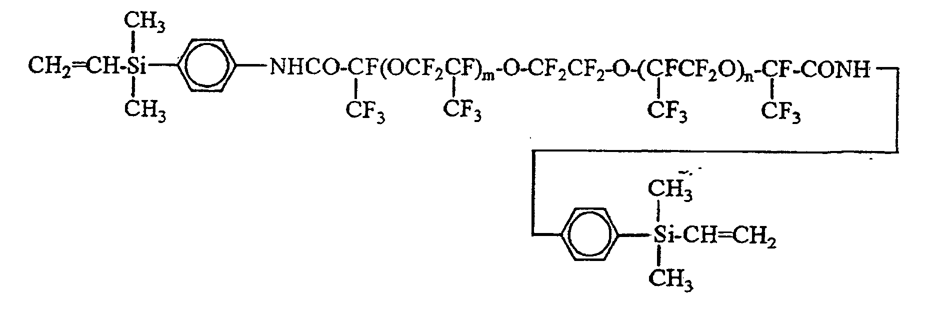

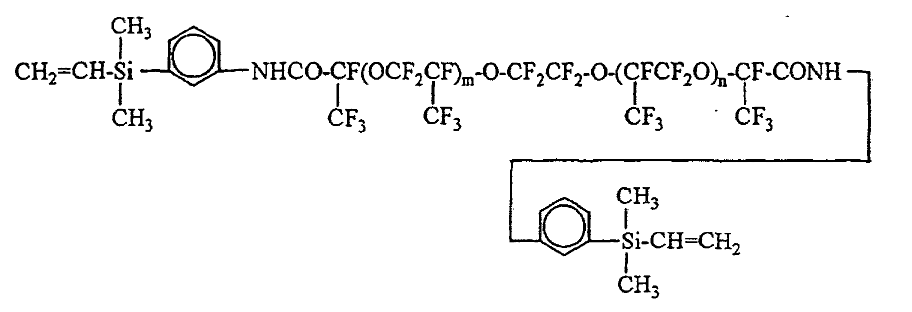

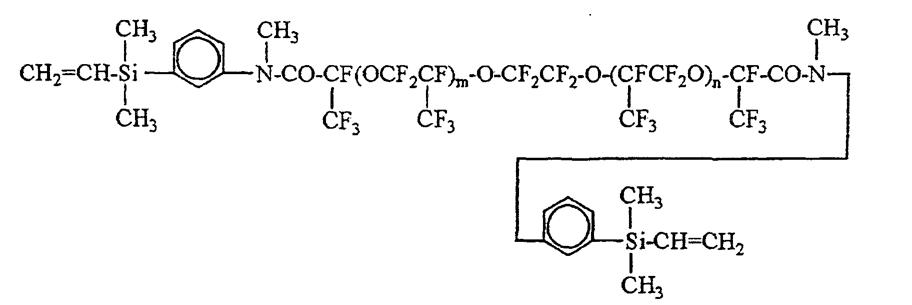

It is sometimes preferred to adjust the linear fluoropolyether compound to a desired weight average molecular weight for a particular application. In this case, a linear fluoropolyether compound is subjected to hydrosilylation reaction with an organosilicon compound having two SiH groups in a molecule by a conventional method under ordinary conditions to give a chain-lengthened product, which can be used as component (A).

The organosilicon compound having two SiH groups in a molecule used to this end is preferably a straight or cyclic organohydrogenpolysiloxane of the following formula (4) or (5). 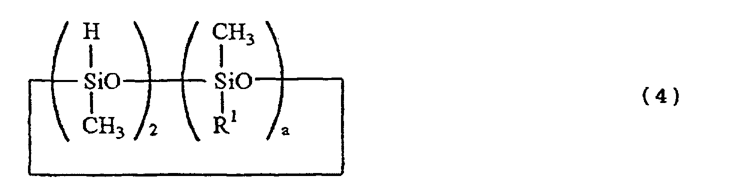 Herein, R¹ is methyl, ethyl, propyl or 3,3,3-trifluoropropyl and letter a is equal to 1 or 2. 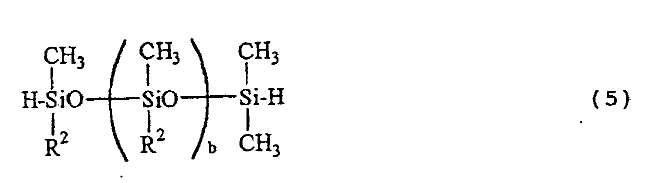 Herein, R² is methyl or 3,3,3-trifluoropropyl and letter b is an integer of 0 to 6.

Of these, the organohydrogenpolysiloxane of the following formula (4') is preferred.

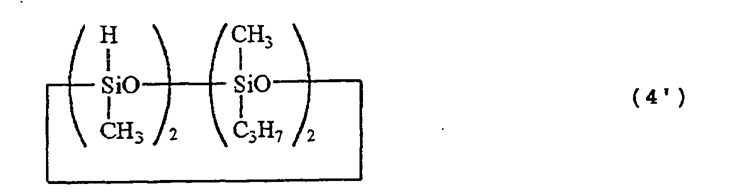

The organosilicon compound having two SiH groups in a molecule is reacted with the fluoropolyether compound of formula (1) under such conditions as to reach a desired extent of chain lengthening. The hydrosilylation reaction shown by the following reaction scheme gives a reaction product which can be used as component (A). It is noted that p, m, r, and n are as defined above and Q represents the moles of the reactant.

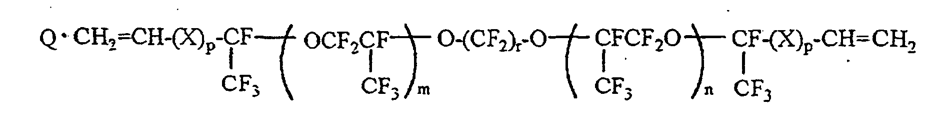

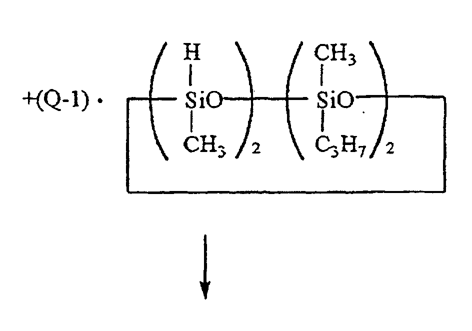

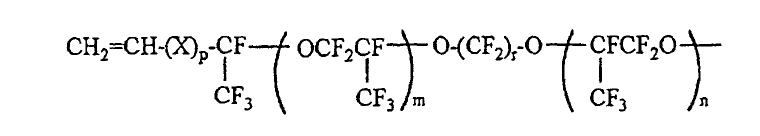

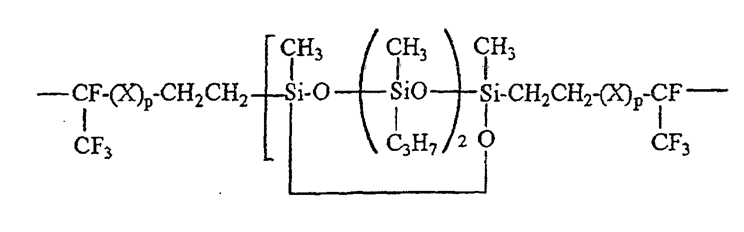

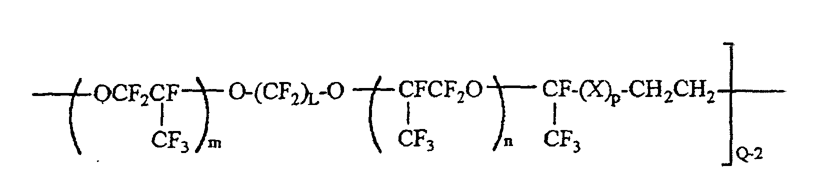

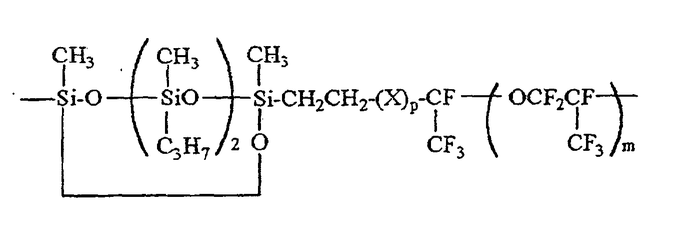

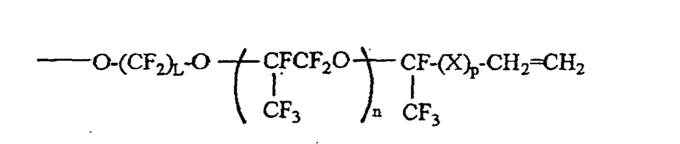

Component (B) is an organosilicon compound having at least two hydrogen atoms each attached to a silicon atom in a molecule, which functions as a crosslinking agent and chain extender for component (A). Any of organosilicon compounds having at least two hydrosilyl (SiH) groups in a molecule is useful. With the compatibility with and dispersibility in component (A), and uniformity after curing taken into account, organosilicon compounds having at least one monovalent perfluoroalkyl group, monovalent perfluorooxyalkyl group, divalent perfluoroalkylene group or divalent perfluorooxyalkylene group as well as at least two, preferably at least three hydrosilyl groups (or SiH groups) are preferred.

The perfluoroalkyl, perfluorooxyalkyl, perfluoroalkylene and perfluorooxyalkylene groups are exemplified by the groups of the following general formulae.
monovalent perfluoroalkyl groups:

   CₘF₂ₘ₊₁-

   m is an integer of 1 to 20, preferably 2 to 10.
divalent perfluoroalkylene groups:

   -CₘF₂ₘ-

   m is an integer of 1 to 20, preferably 2 to 10.
monovalent perfluorooxyalkyl groups: 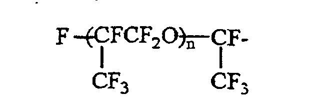 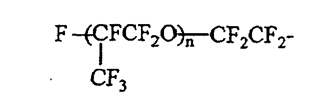 n is an integer of 1 to 5.
divalent perfluorooxyalkylene groups: 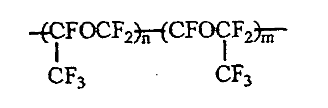
m+n is an integer of 2 to 100.

   -(CF₂O)ₘ-(CF₂CF₂O)ₙ-CF₂-

   m and n each are an integer of 1 to 50.

These perfluoro(oxy)alkyl and perfluoro(oxy)alkylene groups each may be attached either directly to a silicon atom or to a silicon atom through a divalent linking group. The divalent linking group is an alkylene group, arylene group or a mixture thereof, which may further have an ether bond oxygen atom, amide bond or carbonyl bond. Such divalent linking groups of 2 to 12 carbon atoms are preferred. Illustrative examples thereof include

- CH₂CH₂-, -CH₂CH₂CH₂-, -CH₂CH₂CH₂OCH₂-,

- CH₂CH₂CH₂-NH-CO-, -CH₂CH₂CH₂-N(Ph)-CO-,

-CH₂CH₂CH₂-N(CH₃)-CO-,

and

-CH₂CH₂CH₂-O-CO-

wherein Ph is phenyl.

In addition to the monovalent organic group containing a monovalent or divalent fluorinated substituent, that is, a perfluoroalkyl, perfluorooxyalkyl, perfluoroalkylene or perfluorooxyalkylene group, the organosilicon compound (B) may have a monovalent substituent attached to a silicon atom. Exemplary monovalent substituents are substituted or unsubstituted hydrocarbon groups of 1 to 20 carbon atoms including alkyl groups such as methyl, ethyl, propyl, butyl, hexyl, cyclohexyl, octyl and decyl; alkenyl groups such as vinyl and allyl; aryl groups such as phenyl, tolyl, and naphthyl; aralkyl groups such as benzyl and phenylethyl; and substituted ones of these groups in which some of the hydrogen atoms are replaced by chlorine atoms, cyano groups or the like, such as chloromethyl, chloropropyl, and cyanoethyl.

The organosilicon compound (B) may be cyclic, chainlike or three-dimensional network.

The number of silicon atoms in the molecule of the organosilicon compound is not critical although it desirably has about 2 to about 60 silicon atoms, and especially about 3 to about 30 silicon atoms.

Illustrative examples of the organosilicon compound are given below. They may be used alone or in admixture of two or more. In the formulae, Me is methyl and Ph is phenyl.

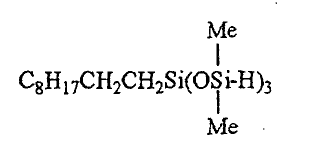

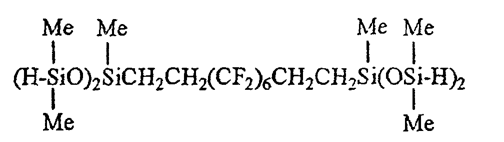

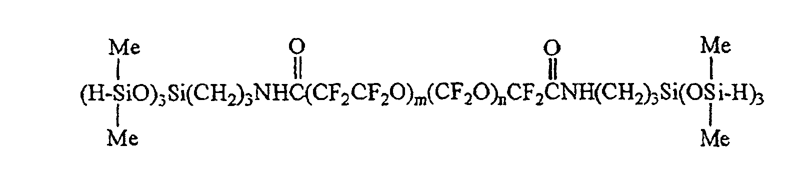

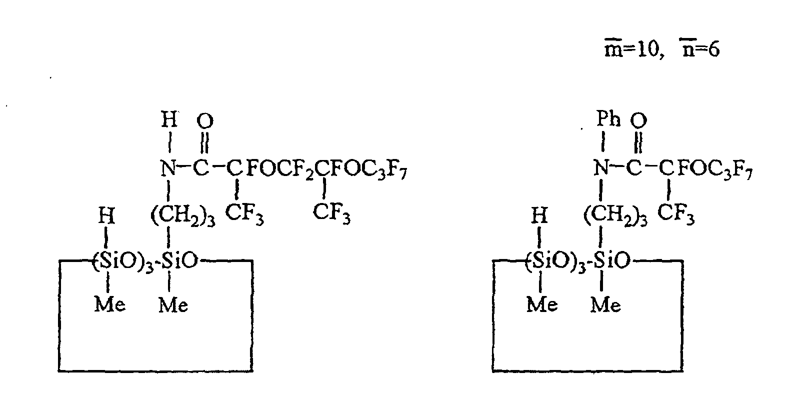

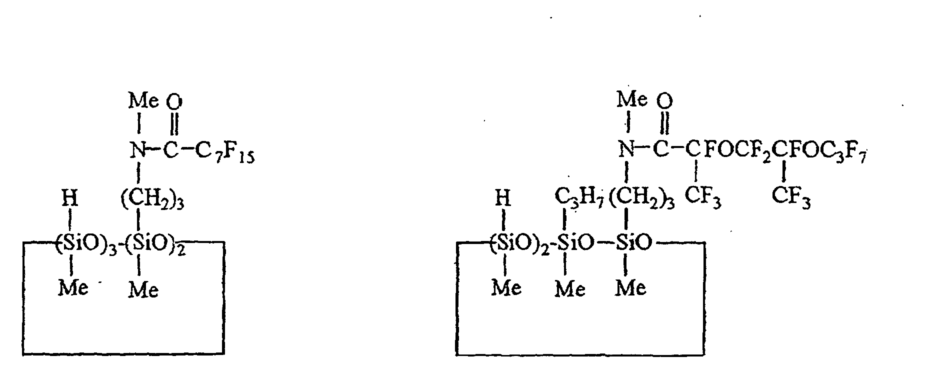

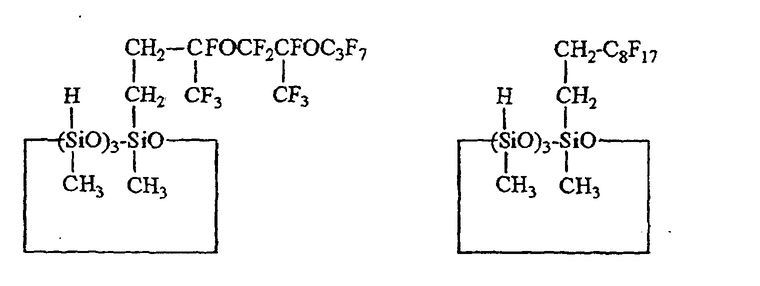

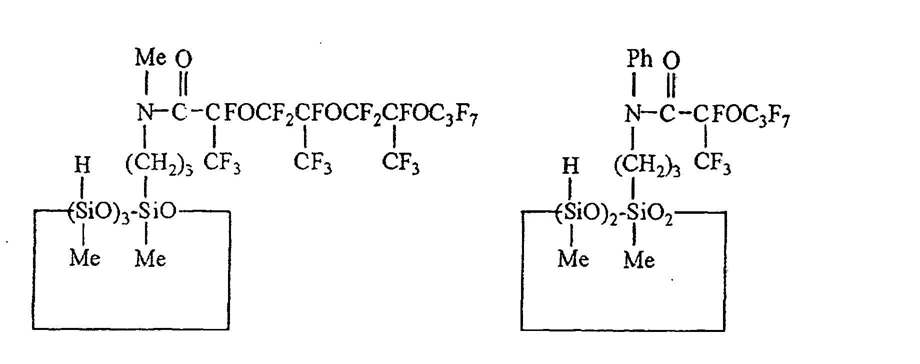

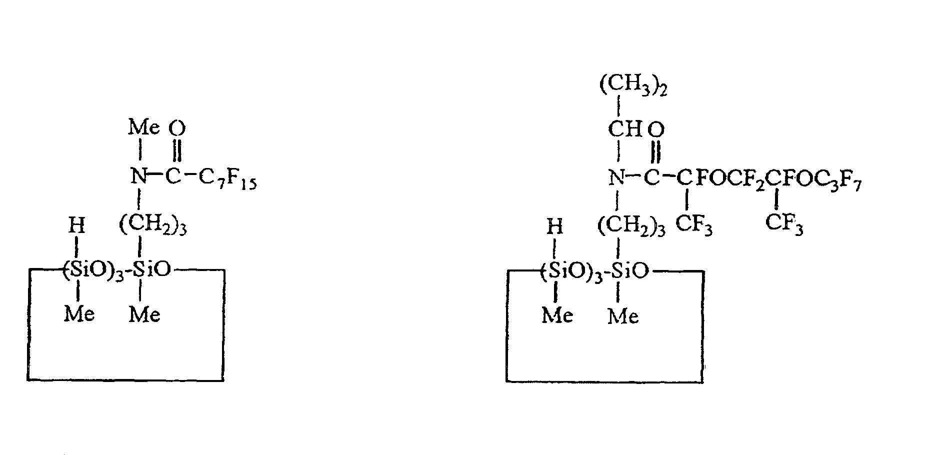

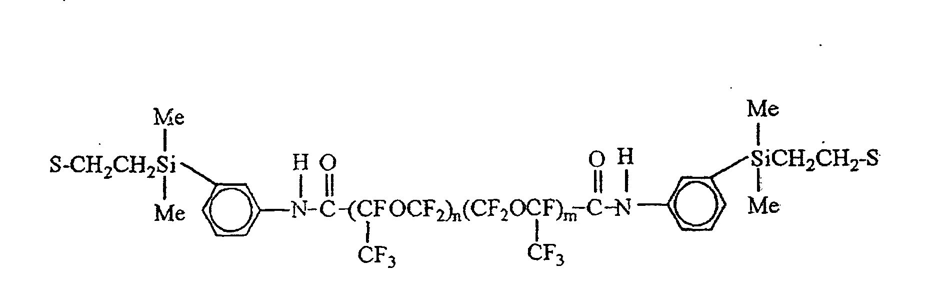

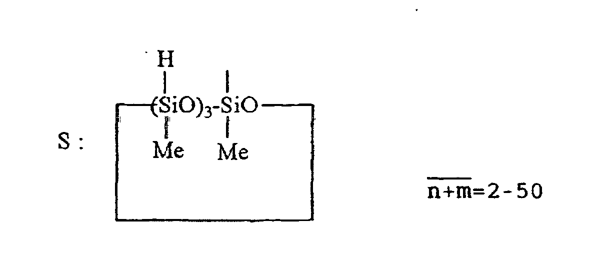

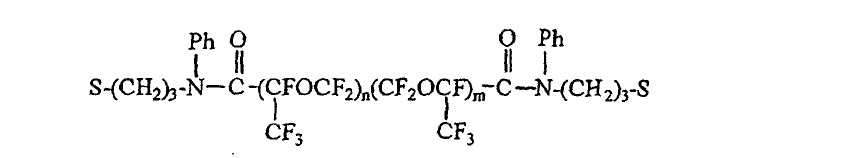

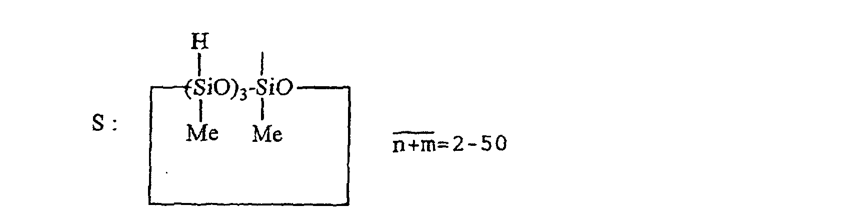

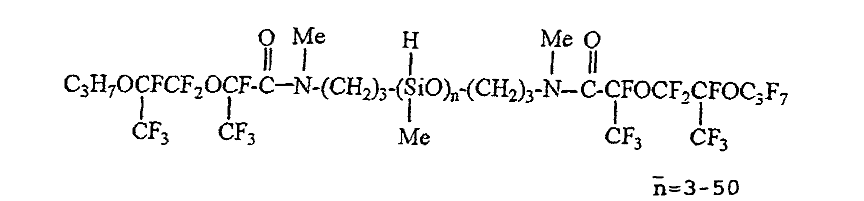

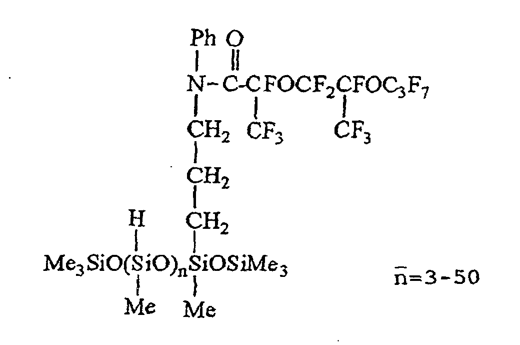

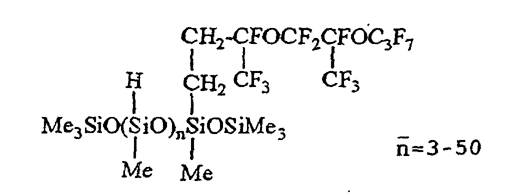

An appropriate amount of component (B) blended is 0.1 to 50 parts, and preferably 0.5 to 30 parts by weight per 100 parts by weight of component (A). Further preferably, component (B) having hydrosilyl groups is blended in such an amount that 0.5 to 5 mol, and more preferably 1 to 2 mol of the hydrosilyl (or SiH) groups may be present per mol of the alkenyl groups (e.g., vinyl, allyl or cycloalkenyl) in component (A). Less amounts of component (B) may achieve an insufficient degree of crosslinking. Excessive amounts of component (B) may allow chain lengthening to become preferential, inviting short curing, foaming, and losses of heat resistance and compression set.

Component (C) is a hydrosilylation catalyst which is preferably selected from transition metals, for example, platinum group metals such as Pt, Rh and Pd, and compounds of transition metals. Most of these compounds are noble metal compounds which are expensive. Platinum compounds are thus used because they are readily available. Exemplary platinum compounds include chloroplatinic acid, complexes of chloroplatinic acid with olefins such as ethylene, complexes of chloroplatinic acid with alcohols and vinylsiloxanes, and platinum supported on silica, alumina or carbon though not limited thereto. Known platinum group metal compounds other than the platinum compounds include rhodium, ruthenium, iridium, and palladium compounds, for example, RhCl(PPh₃)₃, RhCl(CO)(PPh₃)₂, RhCl(C₂H₄)₂, Ru₃(CO)₁₂, IrCl(CO)(PPh₃)₂, and Pd(PPh₃)₄ wherein Ph denotes phenyl.

The amount of the catalyst used is not critical. A catalytic amount can achieve a desired curing rate. From the economical aspect and to obtain satisfactory cured products, the platinum group metal compound is preferably added in an amount of 0.1 to 1,000 parts, more preferably 0.1 to 500 parts by weight calculated as the platinum group metal per million parts by weight of the entire curable composition.

Component (D) is microparticulate silica which has been surface treated to be hydrophobic and which has a specific surface area of at least 50 m²/g and preferably at least 80 m²/g (as measured by the BET method) and a nitrogen atom content of 500 to 5,000 ppm.

In general, microparticulate silica fillers are prepared by flame hydrolysis of silicon compounds such as silicon tetrachloride and methyltrichlorosilane. Microparticulate silica prepared by this method is useful in the practice of the invention. The microparticulate silica prepared by this method is hydrophilic because a plurality of silanol groups are present on the surface. Thus the silica must be hydrophobicized.

Microparticulate silica treated with silazane compounds is used in the practice of the invention, specifically, microparticulate silica treated with cyclic silazane compounds of the following general formula (2): 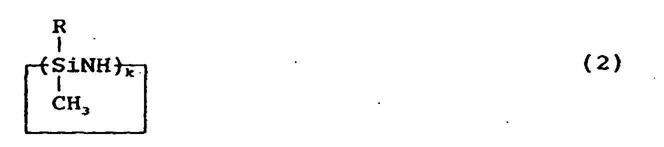 In formula (2), R is selected from halo-substituted or unsubstituted hydrocarbon groups of 1 to 6 carbon atoms including alkyl groups such as methyl, ethyl, propyl, butyl, hexyl, and cyclohexyl, alkenyl groups such as vinyl and allyl, phenyl, and substituted ones of these groups in which some of the hydrogen atoms are replaced by halogen atoms, such as chloromethyl, chloropropyl, 3,3,3-trifluoropropyl, and 3,3,4,4,5,5,6,6,6-nonafluorohexyl; and k is an integer of 3 to 10.

Of the cyclic silazane compounds of formula (2), the compound of the following general formula (2') is most preferred. 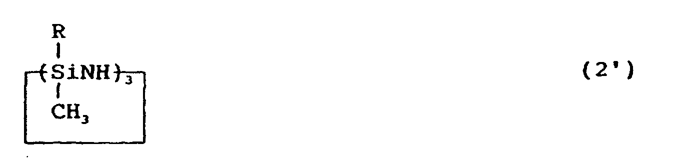 R is as defined above.

The microparticulate silica (D) should have a nitrogen atom content of at least 500 ppm. Maximum nitrogen content is preferably 5000 ppm, more preferably 2500 ppm. Lower nitrogen atom contents fail to provide satisfactory compression set. Excessive nitrogen atom contents may retard the catalysis of the hydrosilylation catalyst. The nitrogen content in microparticulate silica can be determined by Kjeldahl method, for example.

Further preferably, the microparticulate silica (D) is such that when 4 g of the silica is dispersed in a mixture of 50 ml of pure water and 50 ml of methanol, the dispersion exhibits pH 8.5 to 10.5 and especially pH 9.0 to 10.5. Silica giving lower pH may fail to achieve satisfactory compression set whereas silica giving higher pH can retard the catalysis of the hydrosilylation catalyst.

An appropriate amount of component (D) added is 5 to 60 parts, and preferably 10 to 40 parts by weight per 100 parts by weight of component (A). Less amounts of component (D) fail to achieve sufficient reinforcement. With excessive amounts of component (D) used, cured rubber is often affected thereby, for example, losing strength and elongation.

Insofar as the benefits of the invention are not impaired, various additives may be added to the inventive composition in addition to the above essential components (A) to (D). Such optional additives include inhibitors of the hydrosilylation catalyst, for example, acetylene alcohols such as 1-ethyl-1-hydroxycyclohexane, 3-methyl-1-butyn-3-ol, 3,5-dimethyl-1-hexyn-3-ol, 3-methyl-1-penten-3-ol, and phenylbutynol, as well as 3-methyl-3-penten-1-yn and 3,5-dimethyl-3-hexen-1-yn; tackifiers, for example, organosiloxanes having alkoxy, epoxy or SiH groups in the molecule such as the compound shown below; pigments such as iron oxide, cerium oxide and carbon black; colorants, dyes, and antioxidants. These are well-known.

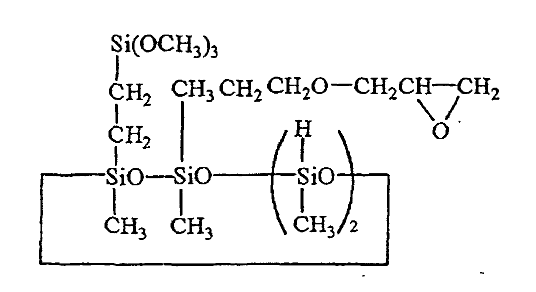

Depending on its application, the rubber composition of the invention is formulated as a single composition having all the essential components (A) to (D) incorporated therein, that is, of one part type. Alternatively, the rubber composition is formulated to two part type, for example, one part containing components (A), (B) and (C) and the other part containing components (A), (B) and (D) whereupon the two parts are mixed on use.

The composition of the invention will cure when it is allowed to stand at room temperature or by heating. Often, the composition is preferably cured by heating at a temperature from room temperature (e.g., 10-30°C) to about 180°C for about 5 minutes to about 24 hours.

The curable fluoropolyether base rubber compositions cure into products having significantly improved compression set as well as heat resistance, chemical resistance, solvent resistance, mold release, water repellency, oil repellency, and weather resistance. Thus the compositions are useful in a wider variety of applications and suitable for use as O-rings and gaskets.

### EXAMPLE

Examples of the invention are given below by way of illustration and not by way of limitation. All parts are by weight.

In the examples, the pH of hydrophobicized silica was a measurement of a dispersion of 4 g of the silica in a mixture of 50 ml pure water and 50 ml methanol after it was agitated at 20°C for 30 minutes.

### Example 1

To 100 parts of a polymer of formula (6) shown below (viscosity 4.4 Pa-s, average molecular weight 16500, and vinyl content 0.013 mol/100 g) was added 20 parts of hexamethylcyclotrisilazane-treated microparticulate silica (specific surface area 190 m²/g, surface silanol group number 0.43 group/nm², nitrogen atom content 2189 ppm, and pH 9.8). They were mixed and heat treated at 150°C for 2 hours, then milled on a three-roll mill. There were added 0.3 part of a 50% toluene solution of ethylcyclohexanol, 0.2 part of a toluene solution of a catalyst in the form of chloroplatinic acid modified with a compound of formula (7) shown below (platinum concentration 0.5% by weight), and 2.72 parts of an organosilicon compound containing SiH groups of formula (8) shown below. The ingredients were uniformly mixed, yielding a curable fluoropolyether base rubber composition.

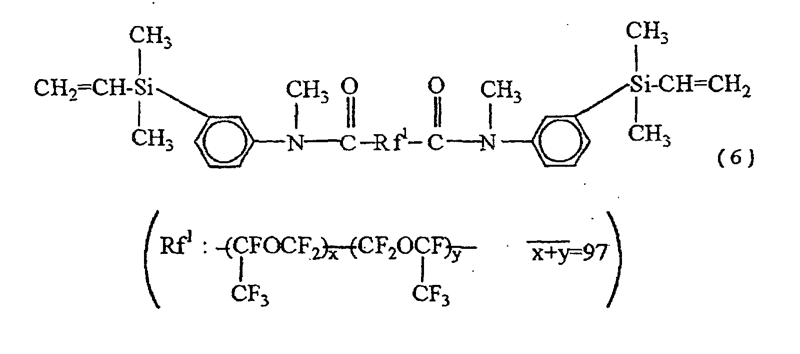

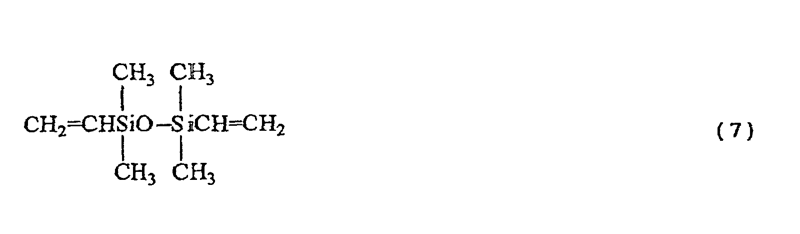

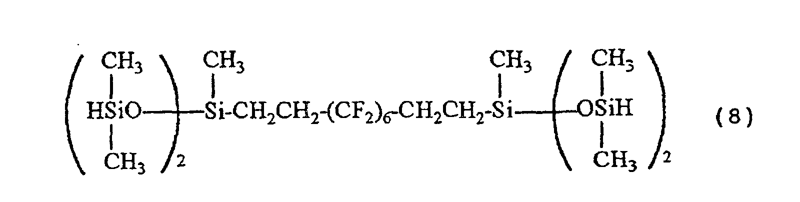

From the composition, a cured sheet of 2 mm thick was prepared by press curing at 150°C for 5 minutes and oven curing at 200°C for 4 hours, and a set of balls for compression set measurement according to JIS K-6301 were prepared. The physical properties and compression set of these test pieces were measured according to JIS K-6301. The results are shown in Table 2.

### Example 2 & Comparative Examples 1-2

Curable fluoropolyether base rubber compositions and cured products were prepared by the same formulation and procedure as in Example 1 except that surface-hydrophobicized microparticulate silica as shown in Table 1 was used. The physical properties and compression set of the test pieces were measured, with the results shown in Table 2.

**Table 1**

| | |
|---|---|
| EX2 | microparticulate silica treated with hexamethylcyclotrisilazane (specific surface area 95 m²/g, nitrogen atom content 1171 ppm, and pH 10.1) |
| CE1 | microparticulate silica treated with dichlorodimethylsilane (specific surface area 180 m²/g, nitrogen atom content 20 ppm, and pH 4.8) |
| CE2 | microparticulate silica treated with hexamethyldisilazane (specific surface area 110 m²/g, nitrogen atom content 67 ppm, and pH 5.6) |

**Table 2**

| | EX1 | EX2 | | CE1 | CE2 |
|---|---|---|---|---|---|
| Hardness (JIS-A) | 64 | 59 | | 62 | 56 |
| Tensile strength †(kgf/cm²) | 86 | 75 | | 85 | 78 |
| Tear strength (kgf/cm) | 18 | 15 | | 19 | 17 |
| Elongation (%) | 250 | 240 | | 270 | 290 |
| Compression set* (%) | 12 | 13 | | 30 | 28 |

| | | | | | |
|---|---|---|---|---|---|
| * 200°C/24 hours | | | | | |
| † 100 kgf/cm² = 9.81 MPa | | | | | |

It is evident from Table 2 that as compared with cured products of comparative compositions having blended therein microparticulate silica whose nitrogen atom content or pH is outside the scope of the invention, cured products of curable fluoropolyether base rubber compositions within the scope of the invention had substantially equivalent physical properties, but were significantly improved in compression set. In particular, the cured products of Examples 1 and 2 using microparticulate silica surface treated with cyclic silazane compounds for hydrophobicization are very low in compression set variation.

Although some preferred embodiments have been described, many modifications and variations may be made thereto in light of the above teachings. It is therefore to be understood that the invention may be practiced otherwise than as specifically described in the examples.

## Claims

1. A curable fluoropolyether base rubber composition comprising:
(A) 100 parts by weight of linear fluoropolyether compound having at least two alkenyl groups per molecule and a perfluoroalkyl ether structure in its backbone;
(B) 0.1 to 50 parts by weight of organosilicon compound having per molecule at least two Si-bonded hydrogen atoms;
(C) a catalytic amount of hydrosilylation catalyst, and
(D) 5 to 60 parts by weight of microparticulate silica having a hydrophobic surface treatment provided by surface treatment with a cyclic silazane compound of the following general formula (2): 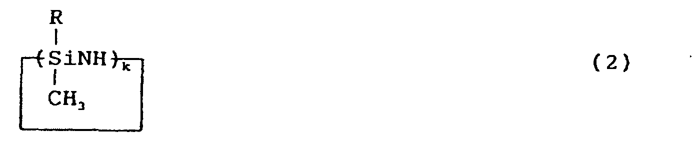
wherein groups R are selected independently from substituted and unsubstituted monovalent hydrocarbon groups of 1 to 6 carbon atoms, in which one or more hydrogen atoms may be replaced by halogen atoms, and k is an integer of 3 to 10, said silica having a specific surface area of at least 50 m²/g and a nitrogen atom content of from 500 to 5,000 ppm.

2. A composition of claim 1 wherein the linear fluoropolyether compound (A) is of the following general formula (1): 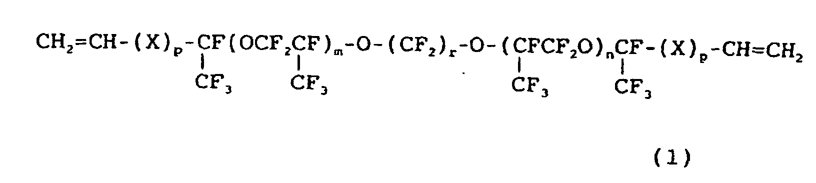 wherein X is independently -CH₂-, -CH₂O- or -Y-NR-CO-
wherein Y is -CH₂- or a group of the following structural formula (A): 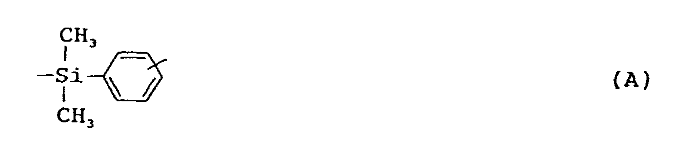 and R is hydrogen, methyl, phenyl or allyl,
letters p are independently equal to 0 or 1, r is an integer of 2 to 6, and m and n are integers of 0 to 200.

3. A composition according to claim 2 in which the linear fluoropolyether compound of formula (1) has a weight average molecular weight from 1000 to 50,000,

4. A composition according to claim 2 or claim 3 in which the linear fluoropolyether compound is selected from the following, in which m and n are as defined previously:

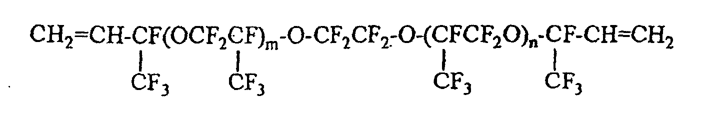

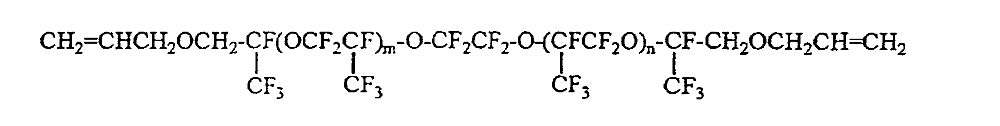

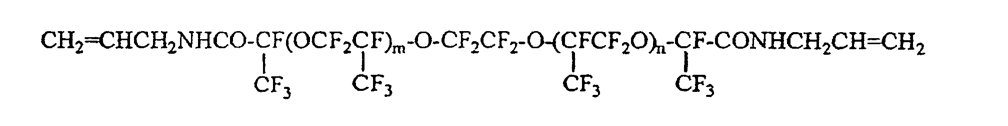

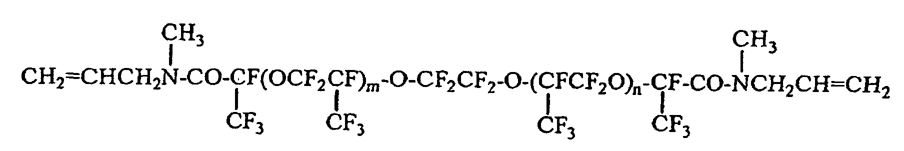

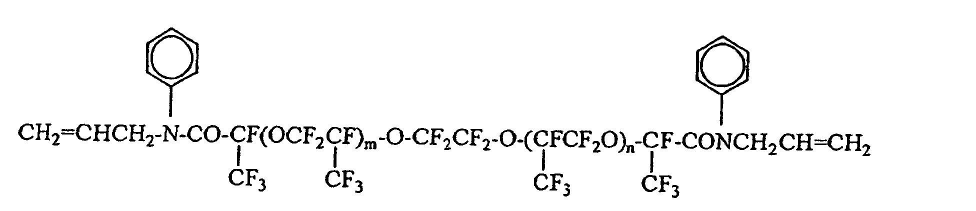

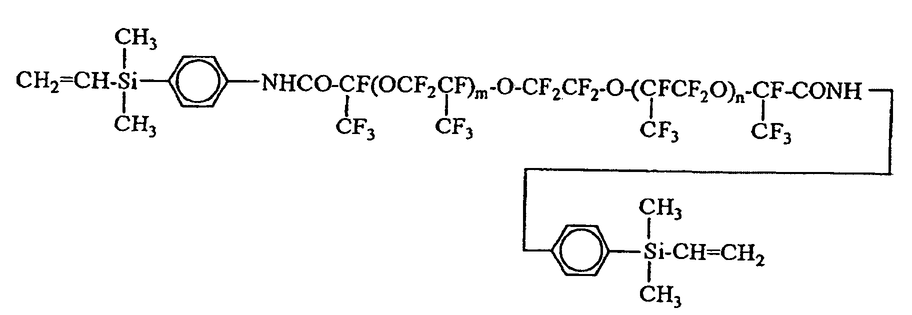

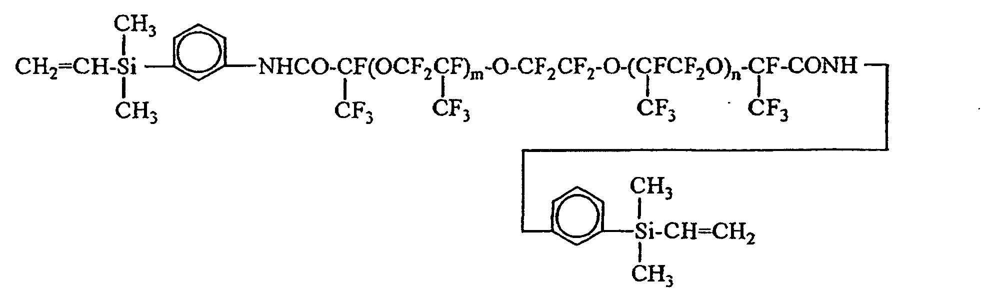

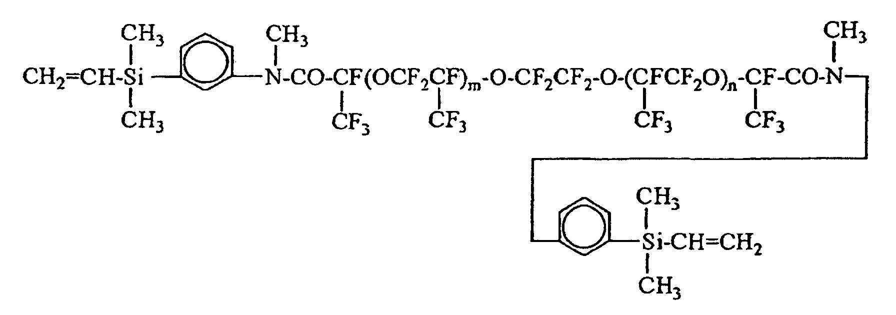

5. A composition according to any one of the preceding claims wherein the cyclic silazane compound of formula (2) with which the silica has been treated is represented by the following general formula (2'): 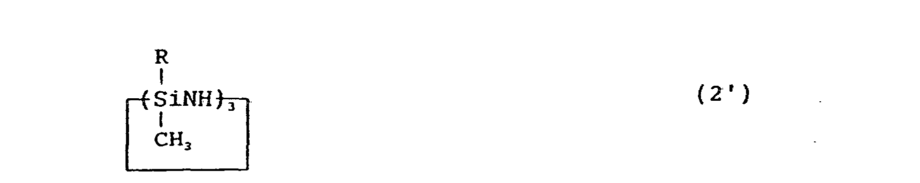 wherein R is as defined in claim 1.

6. A composition according to any one of the preceding claims wherein said microparticulate silica is such that, in a test when 4 g of the silica is dispersed in a mixture of 50 ml of pure water and 50 ml of methanol, the dispersion exhibits pH from 8.5 to 10.5.

7. A composition according to claim 6 in which said silica is such that in said test said pH is from 9.0 to 10.5.

8. A composition according to any one of the preceding claims containing component (B) in an amount providing from 1 to 2 mol of (B)'s hydrosilyl groups per mol of alkenyl groups in component (A).

9. An article comprising a cured rubber composition according to any one of the preceding claims.

10. An article according to claim 9 which is a seal element.

11. An article according to claim 10 which is an O-ring or gasket.

12. In a composition as defined in any one of claims 1 to 8, the use of the nitrogen content of at least 500 ppm in the microparticulate silica to reduce the compression set of the cured composition.

## Patentansprüche

1. Härtbare Kautschukzusammensetzung auf Fluorpolyether-Basis, umfassend:
(A) 100 Gewichtsteile einer linearen Fluorpolyetherverbindung, die zumindest zwei Alkenylgruppen pro Molekül und eine Perfluoralkylether-Struktur in ihrer Hauptkette aufweist;
(B) 0,1 bis 50 Gewichtsteile einer Organosiliciumverbindung mit zumindest zwei jeweils an ein Siliciumatom gebundenen Wasserstoffatomen pro Molekül;
(C) eine katalytische Menge eines Hydrosilylierungskatalysators; und
(D) 5 bis 60 Gewichtsteile Silica-Mikroteilchen mit einer hydrophoben Oberflächenbehandlung, die durch Oberflächenbehandlung mit einer zyklischen Silazanverbindung der folgenden allgemeinen Formel (2) bereitgestellt ist: 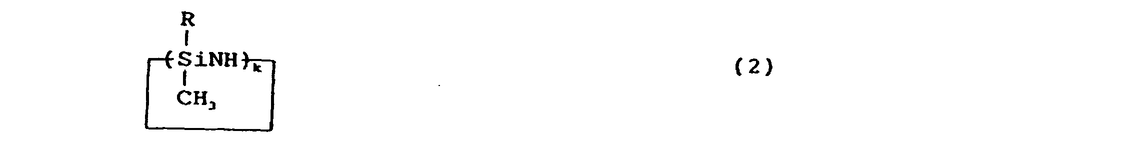
worin die Gruppen R unabhängig voneinander aus substituierten und unsubstituierten, einwertigen Kohlenwasserstoffgruppen mit 1 bis 6 Kohlenstoffatomen ausgewählt sind, worin ein oder mehr Wasserstoffatome gegebenenfalls durch Halogenatome ersetzt sind, und k eine ganze Zahl von 3 bis 10 ist, wobei das Silica eine spezifische Oberfläche von zumindest 50 m²/g und einen Stickstoffatomgehalt von 500 bis 5.000 ppm aufweist.

2. Zusammensetzung nach Anspruch 1, worin die lineare Fluorpolyetherverbindung (A) die folgende allgemeine Formel (1) aufweist: 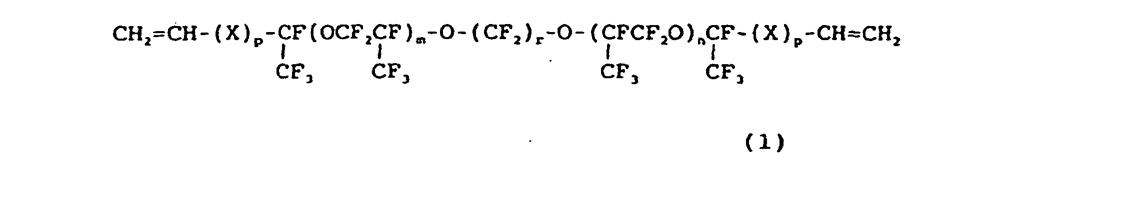 worin die X unabhängig voneinander -CH₂-, -CH₂O- oder -Y-NR-CO- sind, worin Y -CH₂- oder eine Gruppe der folgenden Strukturformel (A) ist: 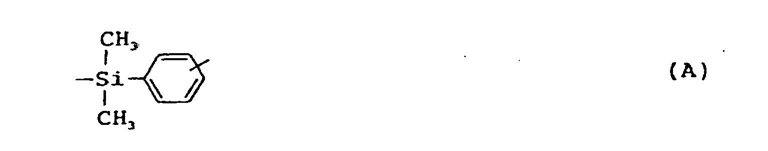 und R Wasserstoff, Methyl, Phenyl oder Allyl ist,
die Indizes p unabhängig voneinander 0 oder 1 sind, r eine ganze Zahl von 2 bis 6 ist und m und n jeweils eine ganze Zahl von 0 bis 200 sind.

3. Zusammensetzung nach Anspruch 2, worin die lineare Fluorpolyetherverbindung der Formel (1) ein gewichtsmittleres Molekulargewicht von 1.000 bis 50.000 aufweist.

4. Zusammensetzung nach Anspruch 2 oder 3, worin die lineare Fluorpolyetherverbindung aus den folgenden ausgewählt ist, worin m und n wie oben definiert sind:

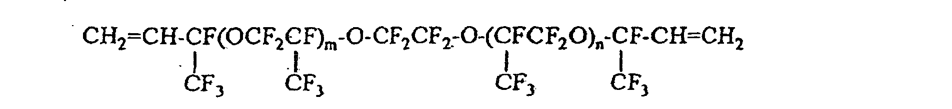

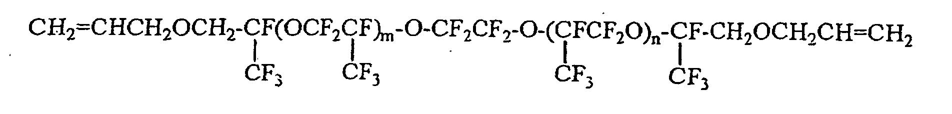

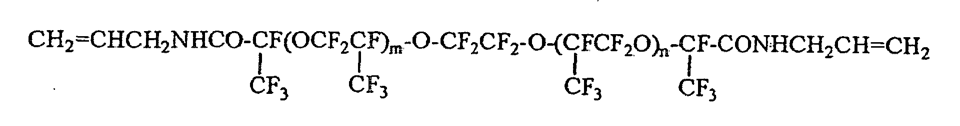

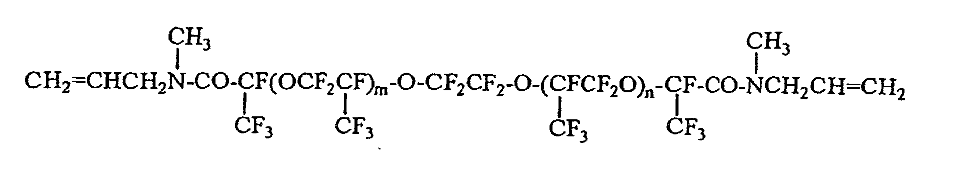

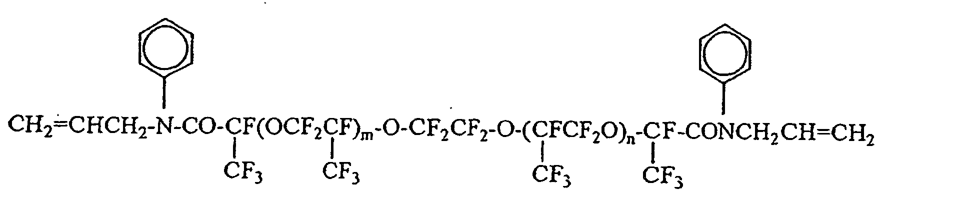

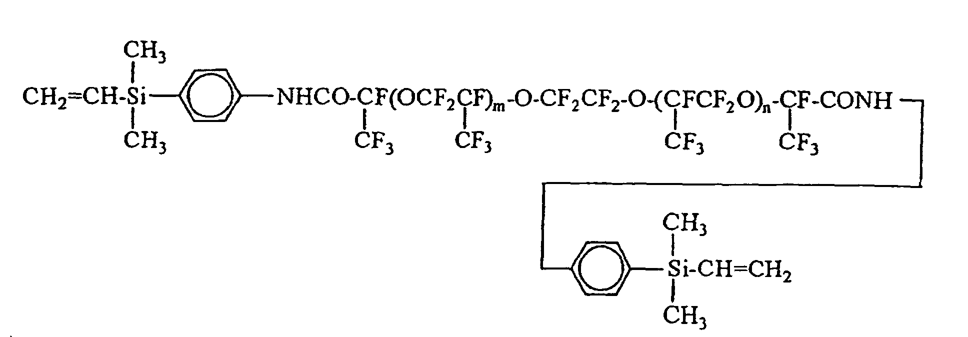

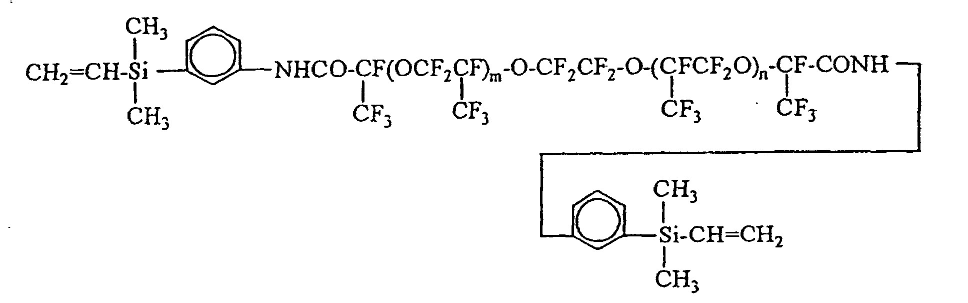

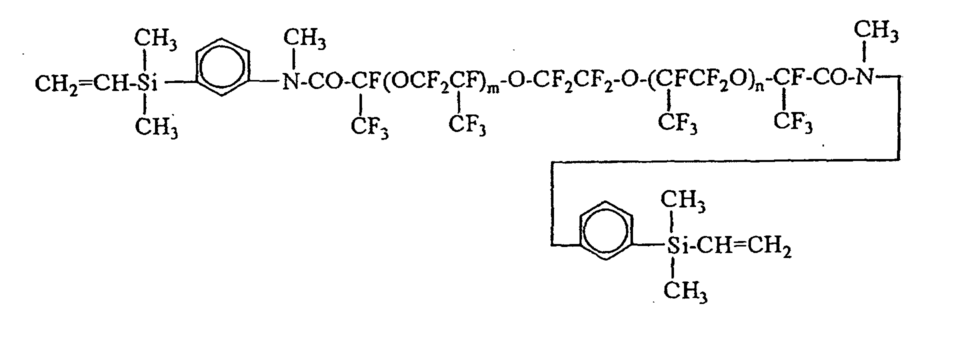

5. Zusammensetzung nach einem der vorangegangenen Ansprüche, worin die zyklische Silazanverbindung der Formel (2), mit der das Silica behandelt wurde, durch die folgende allgemeine Formel (2') dargestellt ist: 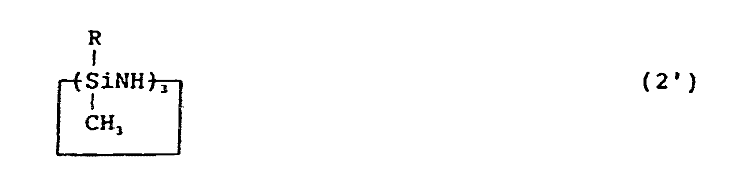 worin R wie in Anspruch 1 definiert ist.

6. Zusammensetzung nach einem der vorangegangenen Ansprüche, worin die Silica-Mikroteilchen so beschaffen sind, dass bei einem Test, bei dem 4 g Silica in einem Gemisch aus 50 ml reinem Wasser und 50 ml Methanol dispergiert werden, die Dispersion einen pH von 8,5 bis 10,5 aufweist.

7. Zusammensetzung nach Anspruch 6, worin das Silica so beschaffen ist, dass der pH in diesem Test 9,0 bis 10,5 beträgt.

8. Zusammensetzung nach einem der vorangegangenen Ansprüche, die Komponente (B) in einer Menge enthält, die 1 bis 2 mol Hydrosilylgruppen von (B) pro mol Alkenylgruppen in Komponente (A) bereitstellt.

9. Gegenstand, umfassend eine gehärtete Kautschukzusammensetzung nach einem der vorangegangenen Ansprüche.

10. Gegenstand nach Anspruch 9, der ein Dichtungselement ist.

11. Gegenstand nach Anspruch 10, der ein O-Ring oder eine Dichtungsscheibe ist.

12. Verwendung eines Stickstoffgehalts von zumindest 500 ppm in den Silica-Mikroteilchen in einer Zusammensetzung nach einem der Ansprüche 1 bis 8 zur Reduzierung der Druckverformung der gehärteten Zusammensetzung.

## Revendications

1. Composition de caoutchouc à base de fluoropolyéther durcissable comprenant :
(A) 100 parties en poids d'un composé de fluoropolyéther linéaire ayant au moins deux groupes alcényles par molécule et une structure perfluoroalkyl éther dans son épine dorsale ;
(B) 0,1 à 50 parties en poids d'un composé d'organosilicium ayant par molécule au moins deux atomes d'hydrogène liés au Si ;
(C) une quantité catalytique d'un catalyseur d'hydrosilylation, et
(D) 5 à 60 parties en poids de silice microparticulaire ayant un traitement de surface hydrophobe obtenu par traitement de surface avec un composé de silazane cyclique de la formule générale (2) qui suit : 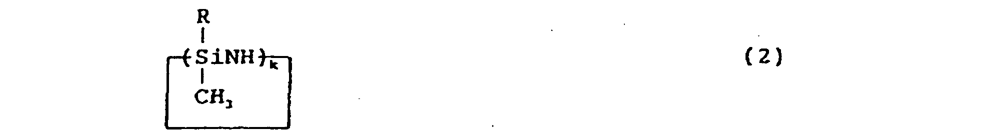
où les groupes R sont sélectionnés indépendamment parmi des groupes hydrocarbures monovalents substitués et non substitués de 1 à 6 atomes de carbone, où un ou plusieurs atomes d'hydrogène peuvent être remplacés par des atomes d'halogène, et k est un entier de 3 à 10, ladite silice ayant une aire superficielle spécifique d'au moins 50 m²/g et une teneur en atome d'azote de 500 à 5000 ppm.

2. Composition de la revendication 1, où le composé de fluoropolyéther linéaire (A) est de la forme générale (1) qui suit : 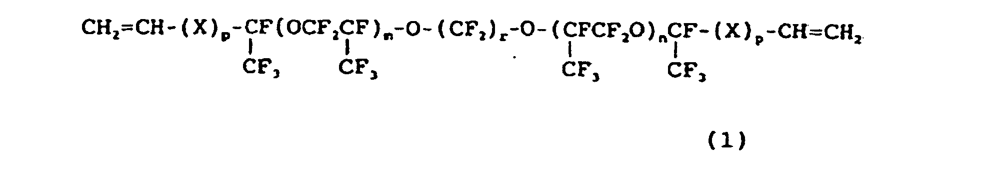 où X est indépendamment -CH₂-, -CH₂O- ou -Y-NR-CO-
où Y est -CH₂- ou un groupe de la formule de structure (A) qui suit : 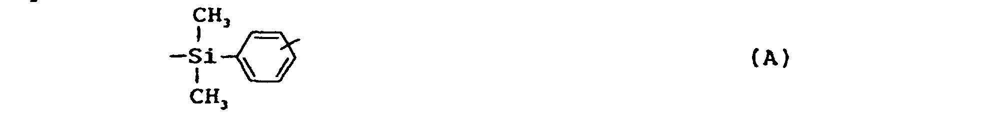 et R est hydrogène, méthyle, phényle ou allyle,
les lettres p sont indépendamment égales à 0 ou 1, r est un entier de 2 à 6, et m et n sont des entiers de 0 à 200.

3. Composition selon la revendication 2, dans laquelle le composé de fluoropolyéther linéaire de formule (1) a un poids moléculaire moyen en poids de 1000 à 50 000.

4. Composition selon la revendication 2 ou la revendication 3, dans laquelle le composé de fluoropolyéther linéaire est sélectionné parmi ceux qui suivent, où m et n sont tels que définis précédemment :

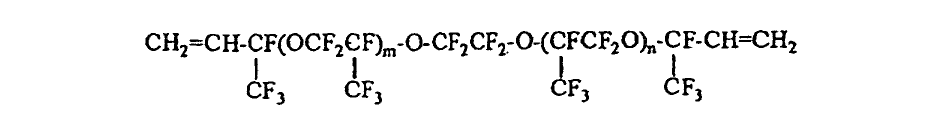

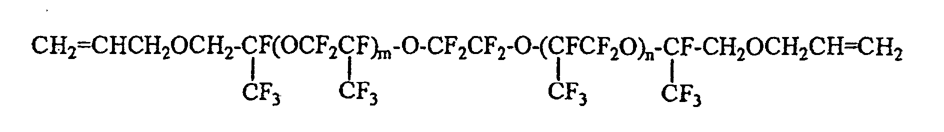

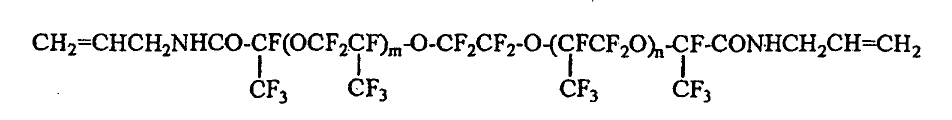

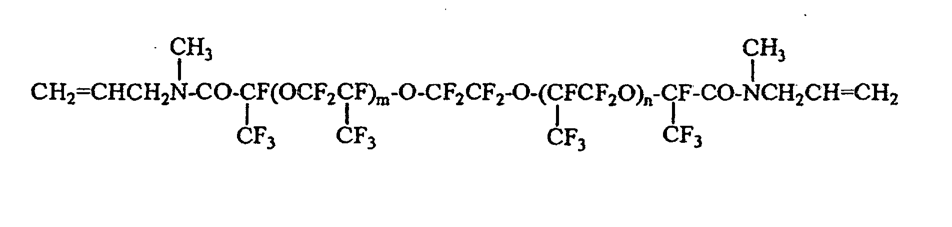

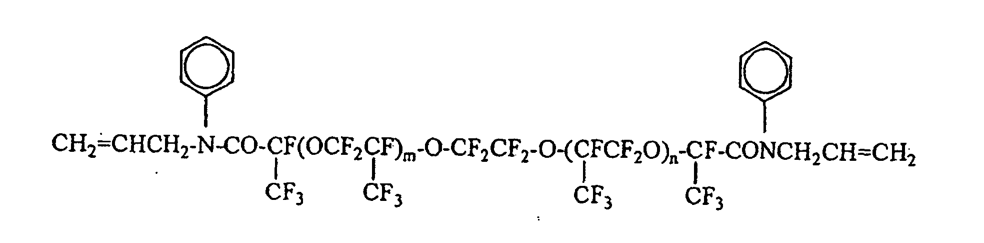

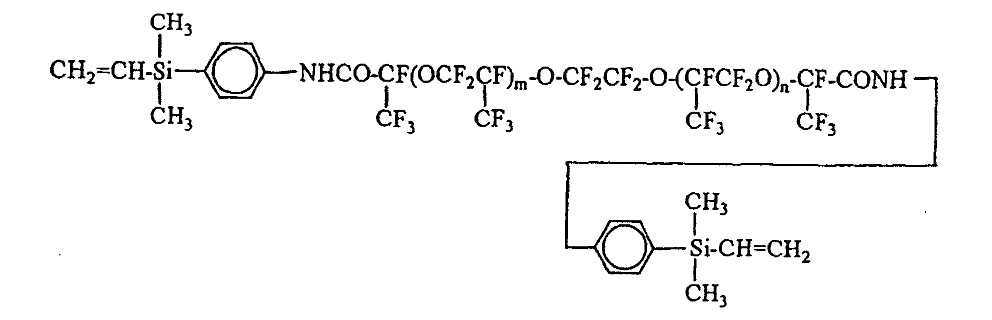

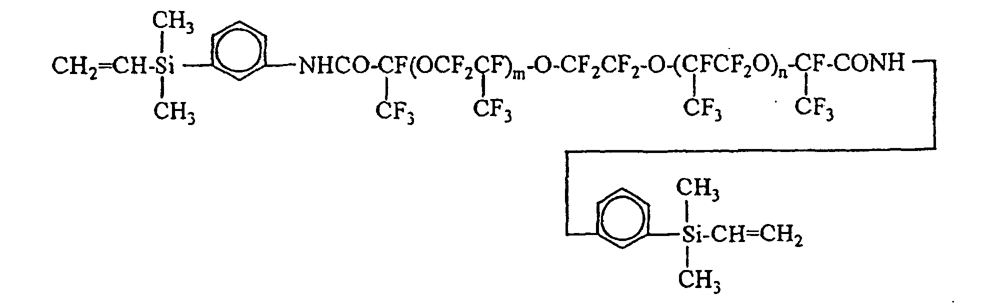

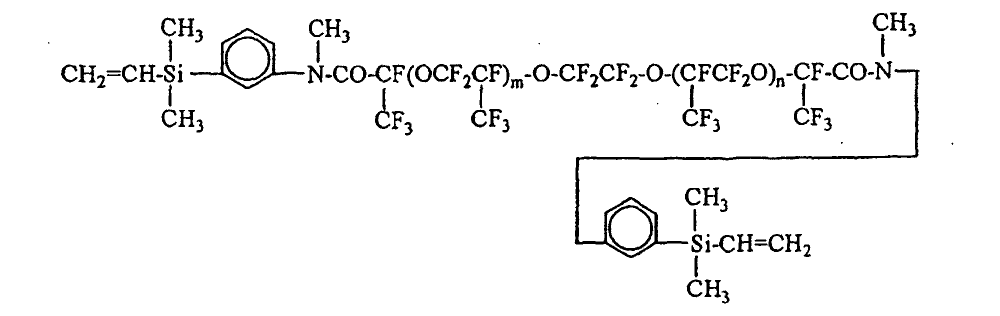

5. Composition selon l'une quelconque des revendications précédentes où le composé de silazane cyclique de la formule (2) avec lequel la silice a été traitée est représenté par la formule générale (2') qui suit : 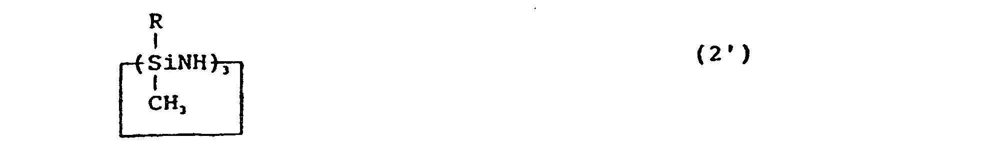 où R est tel que défini à la revendication 1.

6. Composition selon l'une quelconque des revendications précédentes où ladite silice microparticulaire est telle que, dans un test quand 4 g de silice sont dispersés dans un mélange de 50 ml d'eau pure et 50 ml de méthanol, la dispersion présente un pH de 8,5 à 10,5.

7. Composition selon la revendication 6, dans laquelle ladite silice est telle que, dans ledit test, ledit pH soit de 9,0 à 10,5.

8. Composition selon l'une quelconque des revendications précédentes contenant le composant (B) en une quantité produisant de 1 à 2 moles de groupes hydrosilyles de (B) par mole des groupes alcényles dans le composant (A).

9. Article comprenant une composition de caoutchouc durcie selon l'une quelconque des revendications précédentes.

10. Article selon la revendication 9 qui est un élément de joint.

11. Article selon la revendication 10 qui est un joint torique ou une garniture.

12. Dans une composition telle que définie dans l'une quelconque des revendications 1 à 8, l'utilisation de la teneur en azote d'au moins 500 ppm dans la silice microparticulaire pour réduire la déformation permanente à la compression de la composition durcie.
